# EUROPEAN PATENT SPECIFICATION

(11) **EP 4 145 122 B1**
(45) Date of publication and mention of the grant of the patent: **03.12.2025**
(21) Application number: 20933617.1
(22) Date of filing: 14.05.2020
(51) Int. Cl.: G01N 29/04, G01N 29/24, G01N 27/72, G01N 29/22, G01N 29/28, G01N 29/32

(54) **NON-DESTRUCTIVE TESTING DEVICE AND NON-DESTRUCTIVE TESTING METHOD**
VORRICHTUNG ZUR ZERSTÖRUNGSFREIEN PRÜFUNG UND VERFAHREN ZUR ZERSTÖRUNGSFREIEN PRÜFUNG
DISPOSITIF DE TEST NON DESTRUCTIF ET PROCÉDÉ DE TEST NON DESTRUCTIF

(30) Priority: 30.04.2020 CN 202010361435
(43) Date of publication of application: 08.03.2023
(73) Proprietor: Hefei Institutes of Physical Science, Chinese Academy of Sciences, Hefei, Anhui 230031 (CN)
(72) Inventor: LIU, Xiaochuan, Hefei, Anhui 230031 (CN); QIN, Jinggang, Hefei, Anhui 230031 (CN); ZHOU, Chao, Hefei, Anhui 230031 (CN); WU, Yu, Hefei, Anhui 230031 (CN); LI, Jiangang, Hefei, Anhui 230031 (CN)
(74) Representative: Twelmeier Mommer & Partner
(86) International application number: PCT/CN2020/090156
(87) International publication number: WO 2021/217730

(56) References cited:
- CN-A- 105 675 728
- CN-A- 109 506 768
- CN-U- 201 569 756
- CN-U- 201 569 756
- CN-U- 206 161 187
- CN-U- 206 161 187
- CN-U- 207 351 570
- US-A1- 2006 100 513
- US-A1- 2014 331 771

## Description

### Field of the Invention

The invention relates to the technical field of low temperature testing, in particular to a non-destructive testing device and a non-destructive testing method applied to the technical fields of fusion, accelerator engineering, high temperature superconductivity, aerospace and the like.

### Background of the Invention

Fusion energy utilizes the energy produced by a nuclear fusion reaction, which is safe and clean, has almost unlimited energy, and occupies an important position in the science and technology development plan. One foundation of magnetic confinement fusion technology lies in the technology of superconducting magnet, and a superconducting magnet often need to work under an extreme condition. For example, the superconducting magnet used in a magnetic confinement nuclear fusion device may need to maintain a superconducting state and a steady-state operation under extreme conditions of a temperature of several kelvins, a current of tens of thousands of amps, an electromagnetic force of several hundred kilonewtons, and a strong magnetic field of a dozen teslas, while potentially enduring hundreds of thousands of electromagnetic cycles. During the preparation and operation of the magnetic confinement nuclear fusion device, if the superconducting magnet has defects, it will not only cause the magnet itself to fail to operate safely, but also affect the overall device and cause huge economic losses. For example, an ice coil used as high-temperature superconducting coil has recently been investigated. When subjected to large temperature changes, such as from normal temperature to liquid nitrogen temperature, a crack is prone to appear in the ice coil, which affects its performance. In order to understand the state of the superconducting magnet, there is a need in the art for a non-destructive testing device and a non-destructive testing method that can be applied in a low temperature condition.

Existing non-destructive testing devices and methods are usually used in a normal or high temperature environment. For example, given that the minimum operating temperature of an existing non-destructive testing device is -40°C, if a current temperature is lower than the minimum operating temperature, the performance of the non-destructive testing device will be affected, and even permanent damage will be caused to the device. It is an urgent problem to be solved in the art to realize a non-destructive testing device and method suitable for low temperature environment.

For instance, US 2006/0100513 A1 discloses an ultrasonic probe and an ultrasonic diagnostic apparatus having a cooling system, and in particular, the ultrasonic probe comprises a transducer part, a heat-receiving part, a refrigeration unit and a cable unit, the heat-receiving part absorbs heat generated from the transducer part, and a refrigerant ejection tube included in the cable unit sends the refrigerant for ejecting heat of the heat-receiving part to the refrigeration unit. CN 206161187 U relates to an electromagnetic ultrasonic sensor with temperature monitoring function and a detecting system, wherein the electromagnetic ultrasonic sensor comprises a shell, an ultrasonic detection component arranged inside the shell, and a temperature detection component. In addition, CN 201569756 U discloses a probe of a transient electromagnetic instrument comprising a nonmagnetic glass FRP Dewar casing, a fixing bracket and a sensor, wherein the fixing bracket is arranged in the nonmagnetic glass FRP Dewar casing, and the sensor is a high-temperature superconducting SQUID sensor fixed at a lower end of the fixing bracket.

The information disclosed in the background is only for enhancement of understanding of the general background of the invention and may not be taken as an acknowledgement or any form of suggestion that this information forms the prior art already known to a person skilled in the art.

### Contents of the Invention

In view of the above problem, the object of the present invention is to provide a non-destructive testing technology that can be applied to a low temperature environment.

According to an aspect of the invention, a non-destructive testing device according to claim 1 is provided, which comprises an excitation component, an acquisition component and a probe, the excitation component is connected to the probe, and provides energy to the probe; the probe transmits a first signal to a workpiece to be tested, and receives a second signal corresponding to the first signal; and the acquisition component is connected to the probe, and acquires the first signal and the second signal from the probe; wherein the non-destructive testing device further comprises a probe peripheral assembly, and the probe peripheral assembly surrounds the probe, so that a first space that isolates the probe from an external environment is formed at a periphery of the probe.

The non-destructive testing device further comprises a temperature control assembly, wherein the temperature control assembly is arranged in the first space, and comprises a probe cover and a temperature control element; the probe cover surrounds the probe and is in close contact with the probe; and the temperature control element is arranged on the probe cover, is connected with the excitation component and the acquisition component, is capable of generating heat by excitation of the excitation component, and notifies a detected temperature to the acquisition component, so as to achieve temperature control to the first space.

Optionally, the probe peripheral assembly comprises a cover plate, a bottom plate and a first housing, and the cover plate, the bottom plate and the first housing are combined to form the first space.

Optionally, the probe peripheral assembly further comprises a second housing surrounding the first housing, so that a second space is formed between the second housing and the first housing.

Optionally, the probe peripheral assembly further comprises a vacuum suction port disposed on the second housing, so that a vacuum can be formed in the second space through the vacuum suction port.

Optionally, the probe is an ultrasonic probe, the first signal transmitted by the probe is an ultrasonic signal penetrating the bottom plate, and the second signal received by the probe is another ultrasonic signal returning by penetrating the bottom plate.

Optionally, the bottom plate is made of plexiglass or polyimide material.

Optionally, a coupling agent is applied between a bottom surface of the bottom plate and the workpiece to be tested.

Optionally, the probe cover is made of a material with good thermal conductivity.

Optionally, the probe cover is made of copper.

Optionally, the probe is an electromagnetic probe, the first signal transmitted by the probe is an electromagnetic signal to penetrate the bottom plate, and the second signal received by the probe is another electromagnetic signal returning by penetrating the bottom plate.

According to another aspect of the invention, a non-destructive testing method according to claim 9 is provided, which comprises the following steps: arranging a probe peripheral assembly at a periphery of a probe, so that a first space that isolates the probe from an external environment is formed; arranging the probe and the probe peripheral assembly together at a working position adjacent to a workpiece to be tested; by an excitation component, providing energy to the probe; by the probe, transmitting a first signal to the workpiece to be tested and receiving a second signal corresponding to the first signal; and by an acquisition component, acquiring the first signal and the second signal from the probe, arranging a temperature control assembly in the first space, wherein: the temperature control assembly comprises a probe cover and a temperature control element; the probe cover is arranged to surround the probe and is in close contact with the probe; and the temperature control element is arranged on the probe cover, is connected with the excitation component and the acquisition component, is configured to generate heat by excitation of the excitation component, and is configured to notify a detected temperature to the acquisition component, so as to achieve temperature control to the first space.

According to the non-destructive testing device and the non-destructive testing method according to embodiments of the present invention, a simple and easy non-destructive testing suitable for a low temperature environment, such as a non-destructive testing to a superconducting magnet, can be realized.

### Description of the Drawings

FIG. 1 is a schematic diagram of a non-destructive testing device according to an embodiment of the present invention.
FIG. 2 is a schematic diagram of a probe peripheral assembly and a temperature control assembly of a non-destructive testing device according to an embodiment of the present invention.
FIG. 3 is a schematic diagram of a temperature control assembly of a non-destructive testing device according to an embodiment of the present invention.
FIG. 4 is a schematic diagram of a cover plate of a probe peripheral assembly of a non-destructive testing device according to an embodiment of the present invention.
FIG. 5 is a flowchart of a non-destructive testing method according to an embodiment of the present invention.

For clear description, parts that are not closely related to the technical essence of the present invention are omitted; and in the description and the drawings, the same or similar elements are denoted by the same reference number. It should be understood that the accompanying drawings present a somewhat simplified representation in order to illustrate the basic principles and various features of the present invention, and the scope of the present invention is not limited to the form represented in the drawings.

### Detailed Description of the Embodiments

Embodiments of the present invention will be described in detail below with reference to the accompanying drawings. While the invention has been described in conjunction with the exemplary embodiments, it should be understood that this description is not intended to limit the invention to these exemplary embodiments. On the contrary, the invention is intended to cover not only the exemplary embodiments, but also various alternatives, modifications, and equivalents, which are included within the spirit and scope of the invention as defined by the appended claims.

### First Embodiment

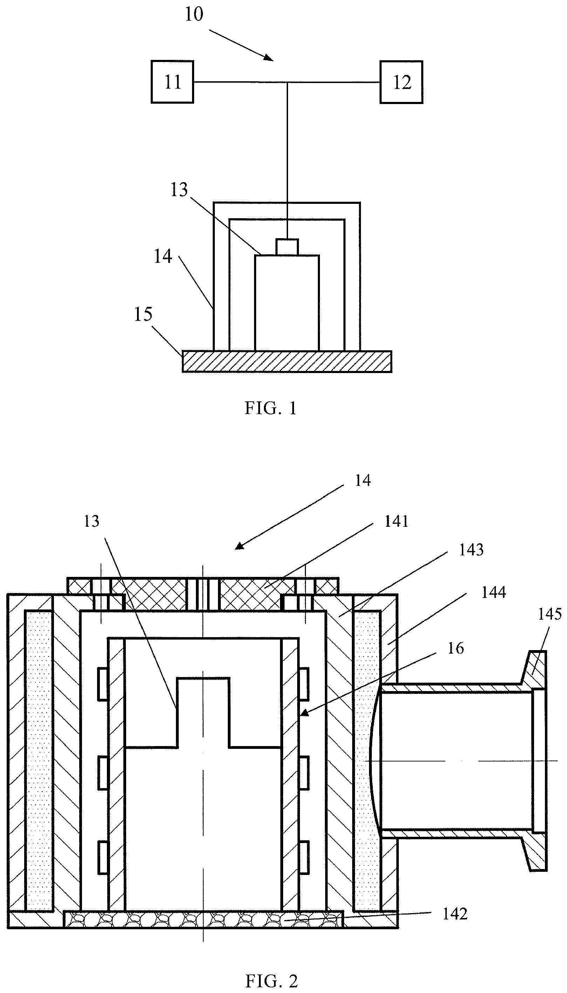

FIG. 1 is a schematic diagram of a non-destructive testing device according to an embodiment of the present invention.

An application scenario of a non-destructive testing device 10 according to an embodiment of the present invention is to perform a non-destructive testing on a workpiece 15 to be tested (e.g., a superconducting magnet or a superconducting conductor), especially a non-destructive testing in a low temperature (e.g., at a temperature of 4K to 200K).

As shown in FIG. 1, the non-destructive testing device 10 according to the first embodiment of the present invention comprises an excitation component 11, an acquisition component 12 and a probe 13, wherein the excitation component 11 and the acquisition component 12 are both connected to the probe 13.

"Connection" as used herein includes not only a physical wired connection, but also a direct or indirect, wired or wireless connection between two or more devices or components in a broad sense, and includes any form of connection between devices or components that communicates information, signals or data.

According to a practical application scenario of the present invention, the excitation component 11 and the acquisition component 12 may be located at a testing site, and are directly connected to the probe 13 through wires or cables. Alternatively, one or both of the excitation component 11 and the acquisition component 12 may be remote from the testing site and wirelessly connected to the probe 13 using wireless communication technology. Applicable wireless communication technologies may include: radio communication, wireless local area network technology such as WiFi, cellular network technology (2G, 3G, 4G, 5G), etc. The scope of the present invention is not limited in this regard.

The first embodiment of the present invention adopts ultrasonic technology to realize the non-destructive testing. The probe 13 is an ultrasonic probe. For example, the probe 13 may be an ultrasonic probe mainly composed of a piezoelectric material, which may both transmit ultrasonic wave and receive ultrasonic wave.

The first embodiment of the present invention adopts ultrasonic waves with frequencies above 20 KHz (e.g., 1-5 MHz), which have good directivity and strong reflection ability, and facilitate relatively concentrated sound energy.

According to the first embodiment of the present invention, the excitation component 11 is a high-frequency generator capable of generating a high-frequency pulse excitation signal, which provides energy to the probe 13, that is, provides a high-frequency pulse excitation signal; and the acquisition component 12 is a data acquisitor capable of acquiring signal and/or data from the probe.

The high-frequency pulse excitation signal generated by the high-frequency generator is transmitted to the probe 13, the probe 13 generates an ultrasonic wave under the excitation of the high-frequency pulse excitation signal, that is in other words, a transmitted wave, and the transmitted wave propagates toward the workpiece 15. If there is a defect on the surface or inside of the workpiece 15, such a defect will convert a part of the transmitted wave into a defect wave, and the defect wave will be reflected back to the probe 13; the rest of the transmitted wave will also be reflected back to the probe 13 (e.g. reflected by a surface of the workpiece or an end face on the other side), forming a base wave. The ultrasound wave reflected back to the probe 13 is converted into return signal and/or return data, and then acquired by the data acquisitor.

By analyzing the transmitted wave, the defect wave, and the base wave, for example, analyzing the position relative to a baseline, analyzing amplitude and shape of the defect wave, etc., position, size, property, etc. of the defect may be determined. If the return signal presents only the base wave, it may be determined that the workpiece 15 to be tested has no defect.

In other words, by the excitation of the high-frequency pulse excitation signal, the probe transmits the first signal to the workpiece 15 to be tested, and receives the second signal corresponding to the first signal. According to the first embodiment of the present invention, in case that there is no defect on the surface or inside of the workpiece 15 to be tested, the first signal includes the transmitted wave, and the second signal includes the base wave corresponding to the transmitted wave; and in case that there is a defect on the surface or inside of the workpiece 15 to be tested, the first signal includes the transmitted wave, and the second signal includes the base wave and the defect wave.

The above description to the first embodiment of the present invention is merely an example, and is not intended to limit the present invention to the specific form described above. It may be understood by those skilled in the art that any technical means of generating, transmitting and receiving ultrasonic wave(s), as well as processing and analysis to ultrasonic signal(s), are within the scope of the present invention.

According to the first embodiment of the present invention, the non-destructive testing device 10 further comprises a probe peripheral assembly 14 surrounding the probe 13, so that a first space that isolates the probe 13 from an external environment is formed at the periphery of the probe 13. In other words, the first space is formed between the probe head 13 and the probe peripheral assembly 14.

According to the first embodiment of the present invention, the above-mentioned "isolate" means isolation in a temperature/heat sense, i.e. adiabatic. Moreover, FIG. 1 is a schematic diagram of a non-destructive testing device 10 according to an embodiment of the present invention, and is not intended to limit the present invention to direct contact between the probe 13 and the workpiece 15 to be tested. In fact, as described below in conjunction with the accompanying drawings, the probe 13 is isolated from the workpiece 15 to be tested by at least a part of the probe peripheral assembly 14.

For convenience of description, the surface of the probe 13 closest to the workpiece 15 to be tested is referred to as the bottom surface of the probe 13. According to the first embodiment of the present invention, the probe peripheral assembly 14 surrounds the probe 13, wherein the probe peripheral assembly 14 is in direct contact with the bottom surface of the probe 13, but is not in direct contact with the outer peripheral surface of the probe 13. The first space is formed between the probe peripheral assembly 14 and surfaces of the probe 13 other than/except the bottom surface. Therefore, with the probe peripheral assembly 14, not only the working performance of the probe 13 can be maintained, but also the thermal isolation between the probe 13 and the external environment can be guaranteed.

According to the first embodiment of the present invention, the probe 13 is an ultrasonic probe mainly composed of a piezoelectric material. As known to those skilled in the art, piezoelectric effect of a piezoelectric material has practical value only within a certain temperature range, and the ultrasonic probe may not work if the temperature is too low or too high. For an application scenario of the present invention, that is, a non-destructive testing to a low-temperature superconducting conductor, the temperature of the workpiece 15 to be tested is relatively low (e.g., the temperature is 4K to 200K), and the external ambient temperature of the probe 13 is correspondingly low. With the probe peripheral assembly 14, it can be ensured that the working temperature of the probe 13 is within an appropriate temperature range (for example, 10°C to 70°C), so that the probe 13 can operate normally.

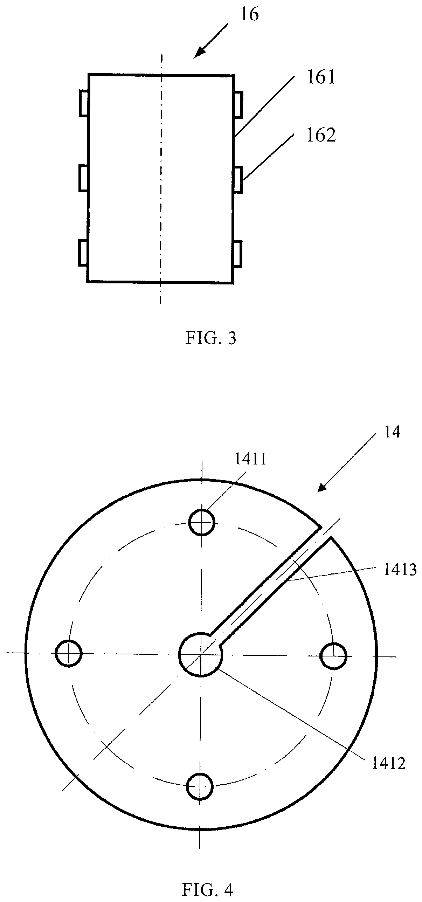

FIG. 2 is a schematic diagram of a probe peripheral assembly and a temperature control assembly of a non-destructive testing device according to an embodiment of the present invention. FIG. 3 is a schematic diagram of a temperature control assembly of a non-destructive testing device according to an embodiment of the present invention. FIG. 4 is a schematic diagram of a cover plate of a probe peripheral assembly of a non-destructive testing device according to an embodiment of the present invention.

According to the first embodiment of the present invention, the non-destructive testing device 10 further comprises a temperature control assembly 16. The temperature control assembly 16 is arranged in the first space, and comprises a probe cover 161 and a temperature control element 162. The probe cover 161 surrounds the probe 13 and is in close contact with the probe 13. The temperature control element 162 is arranged on the probe cover 161 and has the capability of generating heat to control the temperature of the probe 13.

According to an application scenario of the present invention, the temperature control assembly 16 can heat the probe 13 and control the temperature of the probe 13, thereby helping to ensure that the operating temperature of the probe 13 is within an appropriate temperature range (e.g., 10°C to 70°C).

In the first embodiment, the probe cover 161 is a metal cover, such as a copper cover made of copper. Those skilled in the art may understand that, according to actual application scenarios and practical considerations (such as cost, etc.), any other materials that can achieve effective heat transfer between the probe and the probe cover may be used, for example, non-metallic materials such as diamond, silicon, etc. or metallic materials such as silver, copper, gold, aluminum, etc. The exemplary metal cover or copper cover does not constitute a limitation to the invention.

Furthermore, according to the first embodiment of the present invention, the probe cover 161 is in close contact with the probe 13. The probe cover 161 may be in direct contact with the probe 13, i.e., there is no other medium or material between the probe cover 161 and the probe 13. Alternatively, the probe cover 161 may be in close contact with the probe 13 with a thermally conductive material therebetween, for example, a thermally conductive silicone layer is provided between the probe cover 161 and the probe 13. Those skilled in the art may understand that, as long as good heat transfer can be achieved, the specific contact between the probe cover 161 and the probe 13 does not limit the present invention.

In the first embodiment, the temperature control element 162 is a metal heating piece. The temperature control element 162 is connected to the excitation component 11 (the connection is not shown), and is arranged to be in close contact with the probe cover 161. The excitation component 11 applies current to the temperature control element 162, and the temperature control element 162 converts electrical energy into thermal energy, thereby generating heat. The heat is transferred to the probe cover 161 and then to the probe 13, so that the probe 13 can be heated, or the temperature of the probe 13 can be controlled. The number of temperature control elements 162 may be 2-10, for example, 6, as shown in FIGS. 2 and 3. The heating temperature of the temperature control element 162 may be set to 10°C to 70°C.

In addition, according to other embodiment of the present invention, the temperature control element 162 may also be a coil. The excitation component 11 applies an alternating current to the coil so as to generate an induced current in the probe cover 161, which in turn causes the probe cover 161 to generate heat, thereby realizing heating or temperature control to the probe 13.

Those skilled in the art may understand that the specific form, structure, quantity, setting temperature, etc. of the temperature control element do not constitute a limitation to the present invention.

In addition, according to other embodiment of the present invention, the temperature control element 162 may also be a temperature sensor, such as a thermal resistance temperature sensor, and may be connected to the acquisition component 12 (the connection relationship not shown). Therefore, the temperature control element 162 may detect the temperature of the position where it is disposed, for example, the temperature of the first space, and transmit the detected temperature to the acquisition component 12. In this way, the temperature curve/plot of the first space can be obtained. Based on the detected temperature, for example by increasing or decreasing the current applied to the temperature control element 162, the temperature of the first space can be controlled. In other words, the temperature control element 162 can have both heating and temperature control functions.

Alternatively, the temperature control assembly 16 may also comprise a separate temperature sensor (not shown). The temperature sensor may be provided in the first space or on the probe cover 161, so that the temperature of the position where it is disposed can be detected, and the temperature of the first space can be controlled based on the detected temperature.

According to the first embodiment of the present invention, the probe peripheral assembly 14 comprises a cover plate 141, a bottom plate 142 and a first housing 143, and the cover plate 141, the bottom plate 142 and the first housing 143 are combined to form the first space. During the working process, the first space can be kept at normal temperature and normal pressure.

In other words, the cover plate 141, the bottom plate 142 and the first housing 143 together form a relatively closed space, and the probe 13 (or, the probe 13 together with the temperature control assembly 16) is located in the relatively closed space, so that the probe 13 is isolated from the external environment of the non-destructive testing device 10.

As shown in FIG. 4, the cover plate 141 comprises a mounting hole 1411, a central hole 1412 and a wire slot 1413. For example, the cover plate 141 and the first housing 143 may be assembled together through the mounting holes 1411. The central hole 1412 and the wire slot 1413 are used to pass a wire or cable connected to the probe 13. According to a practical application scenario of the present invention, the central hole 1412 and the wire slot 1413 may be sealed before testing, so as to maintain isolation of the first space from the external environment.

According to the first embodiment of the present invention, the bottom plate 142 is made of organic glass/plexiglass or polyimide material, so as to provide good acoustic guiding/transmittance/penetrance performance for the ultrasonic waves transmitted by the probe 13 and those reflected, and at the same time provide certain thermal isolation performance. Those skilled in the art may understand that other materials with good acoustic transmission and/or thermal isolation property may be selected according to the actual application scenario of the present invention. The material of the bottom plate 142 does not constitute a limitation to the present invention.

In addition, although the bottom plate 142 is shown in the shape of a flat plate in FIG. 2, according to an actual application scenario of the present invention, the bottom plate 142 may also include a curved surface or be formed in other shape to be consistent with the surface or shape of the workpiece to be tested.

According to the first embodiment of the present invention, the ultrasonic signal transmitted by the probe 13 penetrates the bottom plate 142, and the probe 13 receives the ultrasonic signal returning by penetrating the bottom plate 142.

According to the first embodiment of the present invention, the bottom surface of the bottom plate 142 is provided with a coupling agent. According to a practical application scenario of the present invention, the coupling agent provided is a low-temperature coupling agent, for example, CryoSoniX^{™} low-temperature coupling agent available from Echo Ultrasonics, LLC, USA. By using the low-temperature coupling agent, the gap between the bottom plate 142 and the workpiece 15 to be tested that may cause abnormal reflection of ultrasonic waves can be eliminated, the propagation of ultrasonic waves between the bottom plate 142 and the workpiece 15 to be tested can be effectively promoted, and the ultrasonic inspection effect under a low temperature condition can be improved.

Optionally, a coupling agent, such as a low-temperature coupling agent, is provided on the contact surface between the probe 13 and the bottom plate 142, so as to further improve the ultrasonic testing effect under a low temperature condition.

According to the first embodiment of the present invention, the first housing 143 is made of a steel material. Those skilled in the art may understand that the first housing 143 may also be made of other materials that are easy to process and assemble. In the first embodiment, the first housing 143 is formed in a cylindrical shape. The shape and material of the first housing 143 do not constitute limitation(s) to the present invention.

According to the first embodiment of the present invention, the probe peripheral assembly 14 further comprises a second housing 144 surrounding the first housing 143, thereby forming a second space between the second housing 144 and the first housing 143. As shown in FIG. 2, the second housing 144 surrounds the first housing 143 from the periphery, so that the probe 13 (or the probe 13 together with the temperature control assembly 16) is further isolated from the external environment of the non-destructive testing device 10.

The second housing 144 is made of a steel material. Those skilled in the art may understand that the second housing 144 may also be made of other materials that are easy to process and assemble. In the first embodiment, the second housing 144 is formed in a cylindrical shape corresponding to the first housing 143. The shape and material of the second housing 144 do not constitute limitation(s) to the present invention.

According to the first embodiment of the present invention, the probe peripheral assembly 14 further comprises a vacuum suction port 145 disposed on the second housing 144, so that a vacuum can be formed in the second space through the vacuum suction port 145. According to the first embodiment of the present invention, one end of the vacuum suction port 145 is connected to the second space, and the other end is connected to an external vacuum pump (not shown), so as to realize the vacuum state of the second space by the operation of the vacuum pump. According to a practical application scenario of the present invention, the vacuum degree of the second space may be maintained at 10 Pa to 10⁻⁵ Pa, so as to achieve further isolation from the external environment of the non-destructive testing device 10.

Alternatively, the non-destructive testing device 10 may not include the vacuum suction port 145. The second space may be filled with foam material or air to further isolate the probe 13 (or, the probe 13 together with the temperature control assembly 16) from the external environment.

### Second Embodiment

The second embodiment of the present invention will be described below with reference to the accompanying drawings.

The difference from the first embodiment is that, the second embodiment of the present invention uses an electromagnetic testing. In the following description, the same reference numeral will be used for the same component as that of the first embodiment, and description to the same or similar structure or function as that of the first embodiment will be appropriately omitted to avoid unnecessary repetition.

The non-destructive testing device 10 according to the second embodiment of the present invention comprises an excitation component 11, an acquisition component 12 and a probe 13, wherein the excitation component 11 and the acquisition component 12 are both connected to the probe 13. The second embodiment of the present invention uses electromagnetic testing technology to realize non-destructive testing. The probe 13 is an electromagnetic probe. By the excitation of the excitation component 11, the probe 13 transmits a first signal to the workpiece 15 to be tested, and receives a second signal corresponding to the first signal. The first signal transmitted by the probe 13 is an electromagnetic signal to penetrate the bottom plate 142, and the second signal received by the probe 13 is an electromagnetic signal returning by penetrating the bottom plate 142.

According to the second embodiment of the present invention, the probe 13 is an electromagnetic probe. According to an application scenario of the present invention, the probe 13 may transmit one or more of microwave, infrared ray, X-ray, or gamma ray. If there is a defect on the surface or inside of the workpiece 15, an anomaly will appear in the returned electromagnetic signal. By detecting such anomaly, location, size, property, etc. of the defect may be determined.

According to the second embodiment of the present invention, the non-destructive testing device 10 further comprises a probe peripheral assembly 14, which surrounds the probe 13, so that a first space that isolates the probe 13 from an external environment is formed at the periphery of the probe 13.

According to the second embodiment of the present invention, the non-destructive testing device 10 further comprises a temperature control assembly 16. The temperature control assembly 16 is arranged in the first space, and comprises a probe cover 161 and a temperature control element 162. The probe cover 161 surrounds the probe 13 and is in close contact with the probe 13. The temperature control element 162 is disposed on the probe cover 161 and is capable of generating heat to control the temperature of the probe 13.

According to the second embodiment of the present invention, the probe peripheral assembly 14 comprises a cover plate 141, a bottom plate 142 and a first housing 143, and the cover plate 141, the bottom plate 142 and the first housing 143 are combined to form the first space.

The difference from the first embodiment lies in, the bottom plate 142 according to the second embodiment of the present invention does not need to use a material having good acoustic transmittance. Instead, the bottom plate 142 is made of a metal material with good electrical conductivity, thereby providing good transmittance performance for the electromagnetic waves transmitted by the probe 13 and those reflected.

The difference from the first embodiment further lies in, between the probe 13 and the bottom plate 142 and between the bottom plate 142 and the workpiece 15 to be tested, there is no need for a low-temperature coupling agent to improve propagation and reflection of an ultrasonic wave under a low temperature condition.

According to the second embodiment of the present invention, the probe peripheral assembly 14 further comprises a second housing 144 surrounding the first housing 143, thereby forming a second space between the second housing 144 and the first housing 143. The probe peripheral assembly 14 further comprises a vacuum suction port 145 disposed on the second housing 144, so that a vacuum may be formed in the second space through the vacuum suction port 145.

Those skilled in the art will understand that the various embodiments disclosed herein are not mutually exclusive and that one embodiment (or feature thereof) may be combined with one or more other embodiments (or feature thereof) to form a new embodiment. The new embodiment is within the scope of the present invention.

The non-destructive testing method according to an embodiment of the present invention is described below.

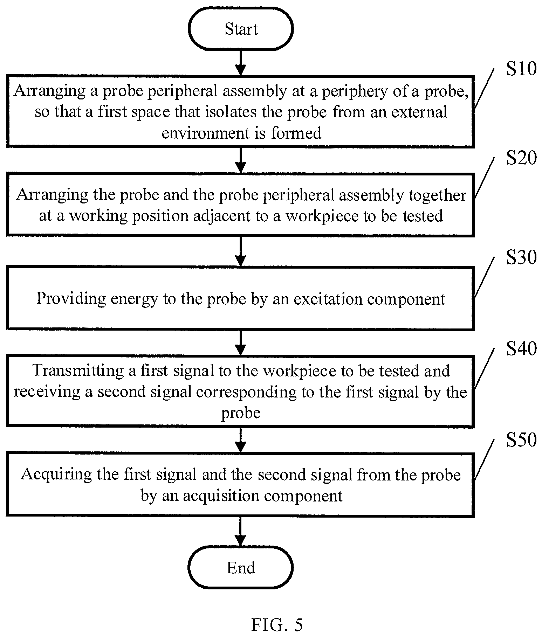

As shown in FIG. 5, the non-destructive testing method according to an embodiment of the present invention comprises:
S10, arranging a probe peripheral assembly at the periphery of a probe, so that a first space that isolates the probe from an external environment is formed;
S20, arranging the probe and the probe peripheral assembly together at a working position adjacent to a workpiece to be tested;
S30, by an excitation component, providing energy to the probe;
S40, by the probe, transmitting a first signal to the workpiece to be tested and receiving a second signal corresponding to the first signal; and
S50, by an acquisition component, acquiring the first signal and the second signal from the probe.

Those skilled in the art may understand that the non-destructive testing method according to the embodiment of the present invention may be combined with one or more features of the non-destructive testing device described above, and such a combination is also within the scope of the present invention. For example, the non-destructive testing method according to the embodiment of the present invention may adopt ultrasonic testing technical means or electromagnetic testing technical means.

According to a specific application scenario of the present invention, a non-destructive testing method at low temperature may specifically comprise the following steps:
1) Assembling a probe cover 161, a probe 13 and a bottom plate 142 from the bottom to form a probe peripheral assembly 14;
2) Making the probe cover 161 in close contact with the probe 13, and assembling other components;
3) Starting a vacuum pump to make a second space form a vacuum state, and the vacuum degree is 10 Pa to 10⁻⁵ Pa;
4) Associating a temperature control element with an acquisition component, and verifying the stability;
5) Connecting lead of the probe to an excitation component and the acquisition component, and setting testing parameters according to the normal temperature mode;
6) Starting the temperature control element to keep the temperature around the probe at 10°C to 70°C; and
7) Applying a low-temperature coupling agent on the bottom plate or the workpiece, and then performing the testing.

Wherein, according to the actual situation of the workpiece to be detected, the bottom plate (that is, an acoustic sensor wedge) is designed to be curved or flat to ensure good coupling between the bottom plate and the workpiece to be tested.

The non-destructive testing method according to an embodiment of the present invention may comprise a testing process. For example, in the testing process, a test workpiece made of 304 steel is used, the test workpiece is placed at the temperature of liquid helium (about 4K) for 40 minutes, a vacuum is formed through a vacuum suction port to make the vacuum degree reach 0.3Pa, and then the vacuum suction port is sealed. The power supply of a temperature control element is turned on so that the temperature of the temperature control element reach 70°C, a low-temperature coupling agent is applied on the test workpiece, the probe is used to test, and a test result is analyzed. The base wave height is 80% of the transmitted wave height in the test on a similar test workpiece at normal temperature (about 25°C), while the base wave height is 75% of the transmitted wave height in the above low temperature test. The above low temperature test proves the feasibility of the embodiment of the present invention.

The above method is accomplished using a robotic arm or similar automatic equipment.

The foregoing has presented specific exemplary embodiments of the invention by way of illustration. The above description is not intended to be exhaustive of the invention, nor is it intended to limit the invention to the exact form disclosed. Obviously, many modifications and variations may be made by those skilled in the art in light of the above description. The exemplary embodiments were chosen and described in order to explain certain principles of the invention and its practical application, to thereby enable those skilled in the art to make and use various exemplary embodiments of the invention, as well as various alternatives and modifications. Instead, the scope of the invention is defined by the appended claims.

## Claims

1. A non-destructive testing device (10), comprising: an excitation component (11), an acquisition component (12) and a probe (13), wherein:
the excitation component (11) is connected to the probe (13), and is configured to provide energy to the probe (13);
the probe (13) is configured to transmit a first signal to a workpiece (15) to be tested, and to receive a second signal corresponding to the first signal;
the acquisition component (12) is connected to the probe (13), and is configured to acquire the first signal and the second signal from the probe (13); and
wherein the non-destructive testing device (10) further comprises a probe peripheral assembly (14), and the probe peripheral assembly (14) is arranged to surround the probe (13), so that a first space that isolates the probe (13) from an external environment is formed at a periphery of the probe (13),
the testing device comprising a temperature control assembly (16) arranged in the first space,
**characterised in that** the temperature control assembly comprises a probe cover (161) and a temperature control element (162);
the probe cover (161) is arranged to surround the probe (13) and is in close contact with the probe (13); and
the temperature control element (162) is arranged on the probe cover (161), is connected with the excitation component (11) and the acquisition component (12), is configured to generate heat by excitation of the excitation component (11), and is configured to notify a detected temperature to the acquisition component (12), so as to achieve temperature control to the first space.

2. The non-destructive testing device (10) of claim 1, wherein the probe peripheral assembly (14) comprises a cover plate (141), a bottom plate (142) and a first housing (143), and the cover plate (141), the bottom plate (142) and the first housing (143) are combined to form the first space.

3. The non-destructive testing device (10) of claim 2, wherein the probe peripheral assembly (14) further comprises a second housing (144) arranged to surround the first housing (143), so that a second space is formed between the second housing (144) and the first housing (143).

4. The non-destructive testing device (10) of claim 3, wherein the probe peripheral assembly (14) further comprises a vacuum suction port (145) disposed on the second housing (144), so that a vacuum can be formed in the second space through the vacuum suction port (145).

5. The non-destructive testing device (10) of claim 2, wherein the probe (13) is an ultrasonic probe configured so that the first signal transmitted by the probe (13) is an ultrasonic signal that penetrated the bottom plate (142), and the second signal received by the probe (13) is another ultrasonic signal that returned by penetrating the bottom plate (142).

6. The non-destructive testing device (10) of claim 5, wherein the bottom plate (142) is made of plexiglass or polyimide material.

7. The non-destructive testing device (10) of claim 6, comprising a coupling agent which is applied between a bottom surface of the bottom plate (142) and the workpiece (15) to be tested.

8. The non-destructive testing device (10) of claim 2, wherein the probe (13) is an electromagnetic probe configured so that the first signal transmitted by the probe (13) is an electromagnetic signal that penetrated the bottom plate (142), and the second signal received by the probe (13) is another electromagnetic signal that returned by penetrating the bottom plate (142).

9. A non-destructive testing method, comprising the following steps:
arranging a probe peripheral assembly (14) at a periphery of a probe (13), so that a first space that isolates the probe (13) from an external environment is formed;
arranging the probe (13) and the probe peripheral assembly (14) together at a working position adjacent to a workpiece (15) to be tested;
providing energy to the probe (13) by an excitation component (11);
transmitting a first signal to the workpiece (15) to be tested and receiving a second signal corresponding to the first signal by the probe (13); and
acquiring the first signal and the second signal from the probe (13) by an acquisition component (12),
arranging a temperature control assembly (16) in the first space, **characterised in that**:
the temperature control assembly (16) comprises a probe cover (161) and a temperature control element (162);
the probe cover (161) is arranged to surround the probe (13) and is in close contact with the probe (13); and
the temperature control element (162) is arranged on the probe cover (161), is connected with the excitation component (11) and the acquisition component (12), is configured to generate heat by excitation of the excitation component (11), and is configured to notify a detected temperature to the acquisition component (12), so as to achieve temperature control to the first space.

## Patentansprüche

1. Zerstörungsfreie Prüfvorrichtung (10), umfassend: eine Erregungskomponente (11), eine Erfassungskomponente (12) und eine Sonde (13), wobei:
die Erregungskomponente (11) an die Sonde (13) angeschlossen ist und so konfiguriert ist, dass sie der Sonde (13) Energie zuführt;
die Sonde (13) so konfiguriert ist, dass sie ein erstes Signal an ein zu prüfendes Werkstück (15) sendet und ein dem ersten Signal entsprechendes zweites Signal empfängt;
die Erfassungskomponente (12) an die Sonde (13) angeschlossen ist und so konfiguriert ist, dass sie das erste Signal und das zweite Signal von der Sonde (13) erfasst; und
wobei die zerstörungsfreie Prüfvorrichtung (10) ferner eine Sondenperipheriebaugruppe (14) aufweist und die Sondenperipheriebaugruppe (14) so angeordnet ist, dass sie die Sonde (13) umgibt, so dass an einem Rand der Sonde (13) ein erster Raum gebildet wird, der die Sonde (13) von einer äußeren Umgebung isoliert,
wobei die Prüfvorrichtung eine Temperaturregelungsbaugruppe (16) umfasst, die in dem ersten Raum angeordnet ist,
**dadurch gekennzeichnet, dass** die Temperaturregelungsbaugruppe eine Sondenabdeckung (161) und ein Temperaturregelungselement (162) umfasst;
die Sondenabdeckung (161) so angeordnet ist, dass sie die Sonde (13) umgibt und in engem Kontakt mit der Sonde (13) steht; und
das Temperaturregelungselement (162) auf der Sondenabdeckung (161) angeordnet ist, mit der Anregungskomponente (11) und der Erfassungskomponente (12) verbunden ist, so konfiguriert ist, dass es durch Anregung der Anregungskomponente (11) Wärme erzeugt, und so konfiguriert ist, dass es eine erfasste Temperatur an die Erfassungskomponente (12) meldet, um eine Temperaturregelung des ersten Raums zu erreichen.

2. Zerstörungsfreie Prüfvorrichtung (10) nach Anspruch 1, wobei die Sondenperipherie baugruppe (14) eine Abdeckplatte (141), eine Bodenplatte (142) und ein erstes Gehäuse (143) umfasst, und die Abdeckplatte (141), die Bodenplatte (142) und das erste Gehäuse (143) miteinander verbunden sind, um den ersten Raum zu bilden.

3. Zerstörungsfreie Prüfvorrichtung (10) nach Anspruch 2, wobei die Sondenperipheriebaugruppe (14) ferner ein zweites Gehäuse (144) umfasst, das so angeordnet ist, dass es das erste Gehäuse (143) umgibt, sodass zwischen dem zweiten Gehäuse (144) und dem ersten Gehäuse (143) ein zweiter Raum gebildet wird.

4. Zerstörungsfreie Prüfvorrichtung (10) nach Anspruch 3, wobei die Sondenperipheriebaugruppe (14) ferner eine Vakuumansaugöffnung (145) umfasst, die an dem zweiten Gehäuse (144) angeordnet ist, so dass durch die Vakuumansaugöffnung (145) ein Vakuum in dem zweiten Raum erzeugt werden kann.

5. Zerstörungsfreie Prüfvorrichtung (10) nach Anspruch 2, wobei die Sonde (13) eine Ultraschallsonde ist, die so konfiguriert ist, dass das von der Sonde (13) gesendete erste Signal ein Ultraschallsignal ist, das die Bodenplatte (142) durchdrungen hat, und das von der Sonde (13) empfangene zweite Signal ein anderes Ultraschallsignal ist, das durch Durchdringen der Bodenplatte (142) zurückgekehrt ist.

6. Zerstörungsfreie Prüfvorrichtung (10) nach Anspruch 5, wobei die Bodenplatte (142) aus Plexiglas oder Polyimidmaterial besteht.

7. Zerstörungsfreie Prüfvorrichtung (10) nach Anspruch 6, umfassend ein Koppelmittel, das zwischen einer Unterseite der Bodenplatte (142) und dem zu prüfenden Werkstück (15) aufgebracht ist.

8. Zerstörungsfreie Prüfvorrichtung (10) nach Anspruch 2, wobei die Sonde (13) eine elektromagnetische Sonde ist, die so konfiguriert ist, dass das von der Sonde (13) gesendete erste Signal ein elektromagnetisches Signal ist, das die Bodenplatte (142) durchdrungen hat, und das von der Sonde (13) empfangene zweite Signal ein anderes elektromagnetisches Signal ist, das durch Durchdringen der Bodenplatte (142) zurückgekehrt ist.

9. Verfahren zur zerstörungsfreien Prüfung, das die folgenden Schritte umfasst:
Anordnen einer Sondenperipheriebaugruppe (14) an einem Rand der Sonde (13), so dass ein erster Raum gebildet wird, der die Sonde (13) von einer äußeren Umgebung isoliert;
Anordnen der Sonde (13) und der Sondenperipheriebaugruppe (14) zusammen an einer Arbeitsposition neben einem zu prüfenden Werkstück (15);
Versorgen der Sonde (13) mit Energie durch eine Erregungskomponente (11);
Senden eines ersten Signals an das zu prüfende Werkstück (15) und Empfangen eines dem ersten Signal entsprechenden zweiten Signals durch die Sonde (13); und
Erfassen des ersten Signals und des zweiten Signals von der Sonde (13) durch eine Erfassungskomponente (12),
Anordnen einer Temperaturregelungsbaugruppe (16) in dem ersten Raum,
**dadurch gekennzeichnet, dass**:
die Temperaturregelungsbaugruppe (16) eine Sondenabdeckung (161) und ein Temperaturregelungselement (162) umfasst;
die Sondenabdeckung (161) so angeordnet ist, dass sie die Sonde (13) umgibt und in engem Kontakt mit der Sonde (13) steht; und
das Temperaturregelungselement (162) auf der Sondenabdeckung (161) angeordnet ist, mit der Erregungskomponente (11) und der Erfassungskomponente (12) verbunden ist, so konfiguriert ist, dass es durch Erregung der Erregungskomponente (11) Wärme erzeugt, und so konfiguriert ist, dass es eine erfasste Temperatur an die Erfassungskomponente (12) meldet, um eine Temperaturregelung des ersten Raums zu erreichen.

## Revendications

1. Dispositif de test non destructif (10), comprenant : un composant d'excitation (11), un composant d'acquisition (12) et une sonde (13), dans lequel :
le composant d'excitation (11) est connecté à la sonde (13) et est configuré pour fournir de l'énergie à la sonde (13) ;
la sonde (13) est configurée pour transmettre un premier signal à une pièce à tester (15) et pour recevoir un deuxième signal correspondant au premier signal;
le composant d'acquisition (12) est connecté à la sonde (13) et est configuré pour acquérir le premier signal et le deuxième signal provenant de la sonde (13) ; et
dans lequel le dispositif de test non destructif (10) comprend en outre un ensemble périphérique de sonde (14), et l'ensemble périphérique de sonde (14) est agencé pour entourer la sonde (13), de sorte qu'un premier espace qui isole la sonde (13) d'un environnement extérieur est formé à la périphérie de la sonde (13),
le dispositif de test comprenant un ensemble de test de température (16) disposé dans le premier espace,
**caractérisé en ce que** l'ensemble de test de température comprend un couvercle de sonde (161) et un élément de contrôle de température (162) ;
le couvercle de sonde (161) est agencé de manière à entourer la sonde (13) et est en contact étroit avec la sonde (13) ; et
l'élément de test de température (162) est disposé sur le couvercle de sonde (161), est connecté au composant d'excitation (11) et au composant d'acquisition (12), est configuré pour générer de la chaleur par excitation du composant d'excitation (11), et est configuré pour signaler une température détectée au composant d'acquisition (12), de manière à réaliser un test de température dans le premier espace.

2. Dispositif de test non destructif (10) selon la revendication 1, dans lequel l'ensemble périphérique de sonde (14) comprend une plaque de recouvrement (141), une plaque de fond (142) et un premier boîtier (143), et la plaque de recouvrement (141), la plaque de fond (142) et le premier boîtier (143) sont combinés pour former le premier espace.

3. Dispositif de test non destructif (10) selon la revendication 2, dans lequel l'ensemble périphérique de sonde (14) comprend en outre un deuxième boîtier (144) agencé de manière à entourer le premier boîtier (143), de sorte qu'un deuxième espace est formé entre le deuxième boîtier (144) et le premier boîtier (143).

4. Dispositif de test non destructif (10) selon la revendication 3, dans lequel l'ensemble périphérique de sonde (14) comprend en outre un orifice d'aspiration sous vide (145) disposé sur le deuxième boîtier (144), de sorte qu'un vide peut être formé dans le deuxième espace à travers l'orifice d'aspiration sous vide (145).

5. Dispositif de test non destructif (10) selon la revendication 2, dans lequel la sonde (13) est une sonde à ultrasons configurée de telle sorte que le premier signal transmis par la sonde (13) est un signal ultrasonore qui a pénétré la plaque de fond (142), et le deuxième signal reçu par la sonde (13) est un autre signal ultrasonore qui est renvoyé après avoir pénétré la plaque de fond (142).

6. Dispositif de test non destructif (10) selon la revendication 5, dans lequel la plaque de fond (142) est réalisée en plexiglas ou en polyimide.

7. Dispositif de test non destructif (10) selon la revendication 6, comprenant un agent de couplage qui est appliqué entre une surface inférieure de la plaque de fond (142) et la pièce à tester (15).

8. Dispositif de test non destructif (10) selon la revendication 2, dans lequel la sonde (13) est une sonde électromagnétique configurée de telle sorte que le premier signal émis par la sonde (13) est un signal électromagnétique qui a traversé la plaque de fond (142), et le deuxième signal reçu par la sonde (13) est un autre signal électromagnétique qui est renvoyé après avoir traversé la plaque de fond (142).

9. Procédé de test non destructif, comprenant les étapes suivantes :
disposer un ensemble périphérique de sonde (14) à la périphérie d'une sonde (13), de manière à former un premier espace qui isole la sonde (13) d'un environnement extérieur ;
disposer la sonde (13) et l'ensemble périphérique de sonde (14) ensemble à une position de travail adjacente à une pièce à tester (15) ;
fournir de l'énergie à la sonde (13) par un composant d'excitation (11) ;
transmettre un premier signal à la pièce à tester (15) et recevoir un deuxième signal correspondant au premier signal par la sonde (13) ; et
acquérir le premier signal et le deuxième signal à partir de la sonde (13) par un composant d'acquisition (12) ;
disposer un ensemble de test de température (16) dans le premier espace,
**caractérisé en ce que** :
l'ensemble de test de température (16) comprend un couvercle de sonde (161) et un élément de test de température (162) ;
le couvercle de sonde (161) est agencé de manière à entourer la sonde (13) et est en contact étroit avec la sonde (13) ; et
l'élément de contrôle de température (162) est disposé sur le couvercle de sonde (161), est connecté au composant d'excitation (11) et au composant d'acquisition (12), est configuré pour générer de la chaleur par excitation du composant d'excitation (11), et est configuré pour signaler une température détectée au composant d'acquisition (12), de manière à réaliser la régulation de la température dans le premier espace.
